# EUROPEAN PATENT APPLICATION

(11) **EP 2 168 911 A1**
(43) Date of publication of application: **31.03.2010**
(21) Application number: 08075920.2
(22) Date of filing: 08.12.2008
(51) Int. Cl.: C01B 3/36

(54) **Partial oxidation of hydrocarbons at cool flame conditions**

(30) Priority: 30.09.2008 EP 08075785
(71) Applicant: Kanbier, D., 2231 JZ Rijnsburg (NL)
(72) Inventor: Kanbier, D., 2231 JZ Rijnsburg (NL)

(57) **Abstract**

A process for initiation of hydrocarbon partial oxidation reactions at temperatures below 900°C, by which undesirable side reactions leading to the formation of soot and methane are prevented. The pre reactions are initiated in the form of a cold flame.

## Description

### General field of the invention.

The initiation of hydrocarbon partial oxidation processes causes irreversible temperature rise into a region where undesirable side reactions occur. The present invention provides a method for initiating and maintaining an optimal hydrocarbon partial oxidation process by applying cool flame technology.

### Background of the invention.

The partial oxidation of hydrocarbons is hampered by simultaneous side reactions, especially those leading to the formation of soot (C) and methane (CH4). Soot formation is due to the exothermic variants of the water gas reaction and the Boudouard reaction, respectively CO + H2 ⇔ C + H2O and 2 CO ⇔ C + CO2, whereas methane formation is caused by the exothermic variant of the reaction of carbon monoxide with hydrogen,
2CO + 2H2 ⇔ CO2 + CH4.
(Hütte, Des Ingenieurs Taschenbuch, Theoretische Grundlagen, 28. Auflage, 1955.)
These three reactions are here referred to as syngas reactions.
At 600°C and 30 bar, equilibrium requires following volume percentages:
* 95% CO2 in a CO/CO2 mixture
* 8% CO, 8% H2 and 84% H2O in a syngas mixture
* 8% CO, 8% H2, 42% CH4 and 42% CO2 in a syngas mixture
In other words, dry syngas without CO2 and methane can only exist at the mentioned conditions - or at lower temperatures and pressures - if the syngas reactions do not take place. This phenomenon extends till much higher temperature; for example in a hand out of Shell Global Solutions of mid 2006, entitled *Status IGCC technology (free information),* quench of the coal gasification reactor product to 900°C is applied, implying that at this temperature no more syngas reactions are taking place.
During combustion, the three syngas reactions are triggered at much lower temperature ranges than they would require outside of a flame, owing to mediation of free radicals, generated in the flame, in the region where the oxidation reactions take place. Once started, the syngas reactions cause a considerable temperature boost. What's more, if there is enough oxygen in the system, the free carbon and the methane generated are re-oxidised to CO (+H2), causing a further temperature increase.
The total temperature rise by partial oxidation, the above side reactions and the local temperature increase required to initiate combustion reactions, or lighting energy, cause the flame temperature to rise above 1100°C.

The build up for methane/oxygen processing is approximately as follows
Lighting energy to at least 600°C, partial oxidation 350°, syngas reactions 200°, re-oxidation 100°, leading to over 1200°C (data in actual units are probably higher).

Once the temperature is above 1100°C, it cannot be substantially reduced below 1100°C by reduction of oxygen supply. In this temperature region a small temperature drop by reduction of oxygen supply causes an increase in methane equilibrium content of the flue gas, and the resulting methane formation generates enough heat to compensate reduced heat generation by reduced oxygen supply. If the hydrocarbon feed contains methane as for instance natural gas, to the observer the above phenomenon has the same effect as if less methane is partially oxidised if less oxygen is supplied.

In conclusion, the generation of undesirable by-products like soot and methane in the partial oxidation contributes to a high process temperature and is at the same time enhanced by the high temperature.
Thus, considerable improvement of the partial oxidation process can be achieved if the process temperatures can be kept low enough to prevent the above syngas reactions from taking place.

### Summary of the invention.

It is an object of the present invention to provide process conditions for hydrocarbon partial oxidation that avoid the initial total temperature rise to over 1100°C as described above. Thus, the reactions of the process of the invention take place at no more than 900°C, preferably in the cool flame temperature region below 627°C (900°K), more preferably below 500°C.

The process of the invention is based upon the following considerations.
The lighting energy, presently used to initiate the process, is the only variable that has sufficient potential effect to prevent, by its reduction, a temperature rise to over 1100°C, and in doing so, prevent syngas reactions from taking place.
Thus the significant feature of the process of the invention is to minimise the lighting energy at the initiation of the process operation.

The object defined above is achieved by igniting a quantity of 0.000001 - 0.0001 (10E-6 - 10E-4) gmols of hydrocarbons in a mixture comprising hydrocarbon feed and oxygen, by the use of a low energy, high temperature ignition device. On this small scale, only the reactions leading to partial oxidation can propagate in chain reactions, and other reactions are temporarily suppressed by heat dissipation, i.e. cooling. The initial reactions, taking place at the desired low temperature, generate the activation energy for further reactions by emitting free radicals, by which these further reactions also can take place at the desired low temperature.

In plant terms, a partial oxidation reactor is filled with a homogeneous feed gas mixture comprising the hydrocarbon feed and oxygen. The first reactions take place in a specific part of the reactor, the ignition zone or zones, on a small scale, where these first reactions are initiated by the use of a low energy, high temperature ignition source. These first reactions thereby take place at the desired low temperature level, and provide the lighting energy for the material in the rest of the reactor, at the desired low temperature, by means of laminar burning. Normal operation is reached when the reaction front has reached the burner, where the feed gas mixture is supplied to the reactor at the required , laminar velocity.

### Detailed description.

In combustion research it is usual to initiate oxidation reactions by supplying a small quantity of energy at a high temperature level in a stationary or slow moving homogeneous fuel/oxidant mixture. Several ignition systems are available for this purpose, based on electric discharge (spark) or hot wires. In most of the cases the ignition energy is in the range of 0.7 - 30 J. One case was found with 5.1 mJ, supplied in a period of 0.7 microsec; see Ohsawa et al, Spectroscopic Measurements of a Spark Ignition in Methane-Oxygen mixture, Research report of the National Institute of Industrial Safety, NIIS-RR-99 (2000).

Various types of tests in combustion research are done in explosion test spheres. For example, see Laminar burning velocity of methane - air - diluent mixtures, M. Ulinski et al, a publication of the Northeastern University, Boston, MA, USA.(Undated. Source: Google) In this example a test sphere of 15 cm diameter is used, about 2 litres volume, others use the standard 20 litres test sphere.(ASTM E1226-94, 1994; ISO 6184-2, 1985) See also A.A. Pekalski et al, Determination of the Explosion Behaviour of Methane and Propene in Air or Oxygen at Standard and Elevated Conditions, Transactions of the Institution of Chemical Engineers, Part B, Process safety and environmental protection, ISSN 0957-5820, vol. 83 (2005), afl.5, pag. 421-429
See also X.J.Gu et al, Laminar burning velocity and Markstein lenghts of methane-air mixtures, Combustion and Flame, vol 121, issues 1-2, April 2000, pp 41-58.

In these spheres a mixture of fuel gas and an oxidant, normally air or oxygen, is lighted by an ignition device in the centre of the sphere. Let, for example, an ignition device supplying 3,5 Joules be used to do an explosion test in a methane/air mixture. This energy is supplied at a temperature well over 1000°.
If there is no heat loss, this energy is sufficient to heat a quantity of about 0.0003g methane in a methane/air mixture, to its ignition temperature, assumed to be around 600°C.
A reaction zone is then created, where oxidation reactions take place. This zone expands and is separated from the methane/air mixture by a moving reaction front. The front propagation velocity depends on the methane/air ratio and on mixture temperature and pressure.
Heat dissipation during the initial oxidation reactions is such, that only the fastest reactions can continue as chain reactions and propagate in the reaction front, the slower reactions follow later in the reaction zone. The reaction front has thereby a lower temperature than the reaction zone, and the reaction front temperature normally is in the cool flame region below 627°C.
If, as is normally the case in commercial partial oxidation, the reactions are limited as closely as possible to formation of carbon monoxide and hydrogen only, the minimum total temperature increase by the reaction will be in the order of 350°C only. Where the feed gas mixture may have a temperature of 20°C, it is clear that the whole reaction partial oxidation can take place in the cool flame temperature region.

Back to the methane/air explosion test.
The expanding reaction zone fills the available space, causing all of the available methane/air mixture to react. Before convection movements in the methane/air mixture become a barrier to reaction front propagation, this front has sufficiently stabilised to overcome the disturbances.
In most tests, reactions in the reaction zone continue till depletion of the oxygen. Heat losses through the test sphere wall may cause the temperature and hence, the pressure, to drop below their maximum values during the last period of the combustion reactions, where the slower reactions take place.
The combustion time for the contents of the test sphere is determined by the velocity with which the front of the reaction zone created in the centre, travels through the stagnant gas mass, initially the laminar burning velocity. The velocity of the reactions is dictated by concentrations of reactants, temperature and pressure; for the initial reactions, leading mainly to the formation of carbon monoxide and hydrogen, the reaction time is in the order of 0.1 sec.

In the publication of A.A. Pekalski et al mentioned above, one experiment is reported with temperature measurements at different places in the test sphere; see p.424, fig 8. From this picture the travel time through the gas mass can be estimated: time elapsed between reaction front passage of two thermocouples and time between front passage up and later on, down, of one thermocouple. Also the reaction time can be estimated by the steepness of the temperature versus time record.
The record also shows, that the first oxidation reactions start at 120 - 200°C, depending on pressure 5-8 bar, and that the first part of the oxidation reactions, containing the fastest reactions, in the top half of the sphere is completed at 400°C, i.e. still 140° below the normal start - of - burning temperature.

A low energy ignition device can of course also be applied in a fuel/oxidant gas mixture, which moves with laminar velocity. Heat dissipation upon ignition will then be larger than in a stagnant environment so that a larger energy supply is required to achieve the desired initiation of reactions.

It is noteworthy that the oxidation reactions can start at temperature levels below the normal ignition temperature of the mixture concerned. In the methane/air laminar burning velocity determination example given above (Ulinski et al), this mixture would normally burn at 540°C or higher, but the test was done with an initial mixture temperature of 25°C, and the temperature of the unburned mixture rose only slowly. A similar behaviour is found in the Pekalski et al article. The conclusion is, that for initiation of oxidation reactions the lighting energy is not necessarily supplied in the form of sensible heat or temperature increase, but may also be supplied by nearby reactions, presumably by mediation of free radicals generated in the reaction zone.
The effect of ignition by free radicals makes it possible that methane oxidation reactions are initiated up to 500°C below the temperature where these reaction would start without free radicals. If the same reduction in threshold temperatures by free radicals is valid for syngas reactions, then these reactions could be expected to take place in flames at 400°C, assuming that the quench temperature for the coal gasification quoted by Shell of 900°C (see above) has no safety margin.. However, the Shell figure of 900°C is likely to be chosen with observation of a safety margin; therefore inventor proposes an assumed threshold temperature of 500°C for syngas reactions in flames, as incorporated in the preferred target for the present invention. Since the whole concept of syngas reactions in flames is new, there is no literature from which data on threshold temperatures of syngas reactions can be derived. In actual operation syngas reactions may already take place below 500°C on a limited scale.

Two explosion tests have been found in the literature, which support the assumption that the syngas threshold temperature in flames is around 500°C.
The one is in a mixture of 73% butane and 27% oxygen, initial condition at 228°C and 4 bar, temperature maximum 500°C; the other is in a mixture of 47% methane, 44% ethane, 2% CO2 and 7% oxygen, initial condition 229°C and 16 bar, temperature maximum 560°C.
Test 1 shows that partial combustion with oxygen as oxidant can be completed at temperatures even below 500°C, without major disturbances by syngas reactions. The temperature versus time records show a rapid increase ending rather suddenly.
The temperature records of test 2 also show a rapid initial increase followed by a slower increase around 500°C. The latter may be caused by syngas reactions. No product compositions were reported with these tests, therefore the conclusions are tentative.
See A.A. Pekalski, Theoretical and experimental study on explosion safety of hydrocarbons oxidation at elevated conditions. (ISBN 90-9018842-8, 2004), p259-262.

The transfer of the reaction front from the ignition zone to the rest of the reactor depends on the propagation of a reaction front in a feed gas mixture. Laminar burning, a phenomenon on which many publications can be found, is in fact the propagation of an oxidation reaction front, based on the initiation of the reactions in the fuel/oxidant mixture upstream of the front by free radicals emission of the reaction zone, which reactions can then take place far below the temperature at which normal burning occurs.
Laminar burning velocity in methane/air mixtures with varying composition, temperature and pressure are reported in several sources in the literature, e.g. the work of Ulinski et al, mentioned above, and Laminar burning velocity of methane - oxygen - argon (CH4 - O2 - Ar) mixtures, Mimmo Elia et al, Northeastern University, Boston, MA, USA. (Undated. Source: Google)
Velocities found are 5 - 160 cm/sec, velocities are increasing with increasing temperature and with decreasing pressure.
In fuel/oxygen mixtures the reaction front propagation velocities are higher than in fuel/air mixtures.

From common general knowledge, derived from combustion research experience, it can be determined how to generate a reaction zone at low temperature, referred to as cool flame, and how cool flame fronts behave, which knowledge is used in the practice of the present invention.
It is proposed that, in normal operation, partial oxidation begins in a stationary reaction front, located in a burner, which burner is located inside a reaction space. In this operation, a homogeneous feed gas mixture, comprising oxygen and hydrocarbons to be partially oxidised, is fed to the stationary reaction front with a certain velocity, equal to the velocity that such a front would have in a stationary feed gas mixture, but in the opposite direction.
In start up operation, a reaction front is generated in an ignition zone as mentioned in the summary of the invention, above, and travels to the burner through the reactor space..

### Application of the invention.

In the application of the invention, research data pertaining to the specific case will allow to make an optimal combination of feed composition, feed gas mixture temperature and product recycle to the feed gas mixture. This results in for instance, at a pressure of 30 bar: a feed gas mixture temperature of 100 - 250°C, a reaction front propagation velocity of 10 - 40 cm/sec, and a recycle of reaction product to the feed mixture of 0 - 40 % by weight on feed gas mixture.
In a feed gas mixture of methane and oxygen at 200°, the temperature rise by pure partial oxidation would be 345°C, the reaction temperature is then 200 - 545°C; with a recycle of 40% (by weight on feed) reaction product the temperature rise would be 248°C, the burning temperature 200 - 448°C. If 3% of the oxygen is spent on hydrogen burning instead of on methane partial oxidation, the temperature rise is 200 - 605°C without recycle, 200 - 498°C with 40% by wt recycle on feed.

The reaction product recycle is introduced because the exact threshold temperatures for syngas reactions in flames are not known. The product recycle reduces the maximum process temperature providing a safety margin.
The product recycle as temperature limiting feature cannot be applied during start up by lack of product. Moreover, syngas present at the cool flame ignition in an ignition zone could lead to the start of syngas reactions, by analogy with the start of combustion reactions. In a situation where product recycle is desirable in normal operation, this recycle is for start up replaced by nitrogen injection as part of the homogeneous feed gas mixture.

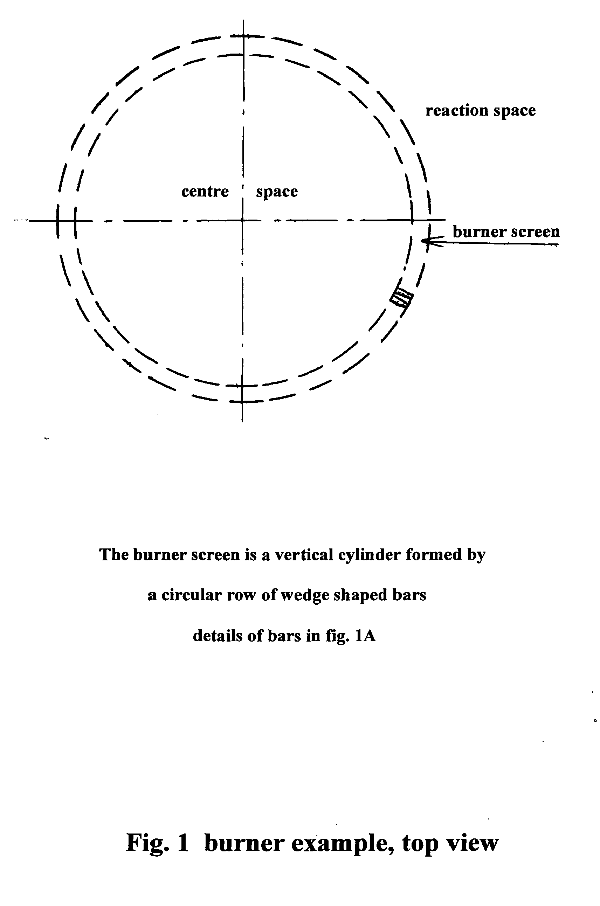

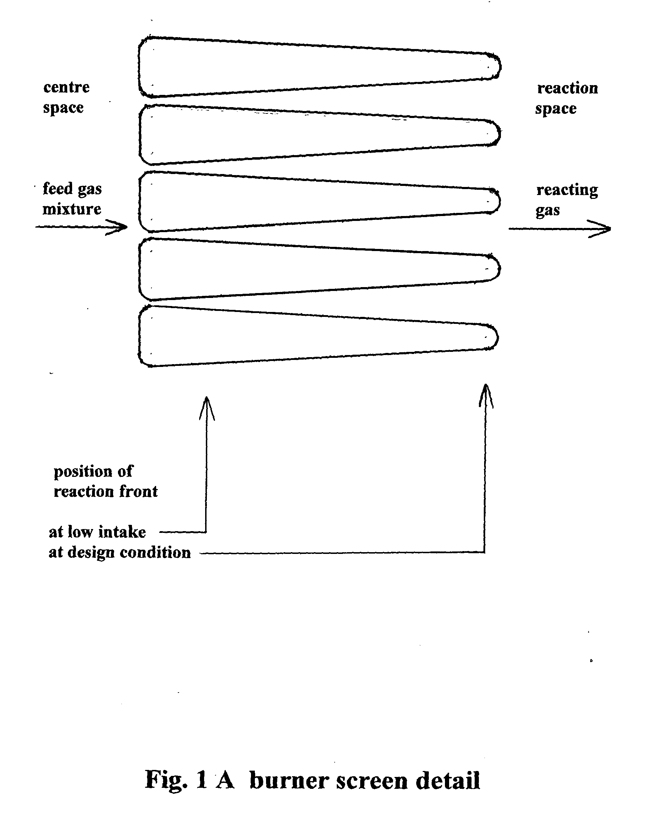

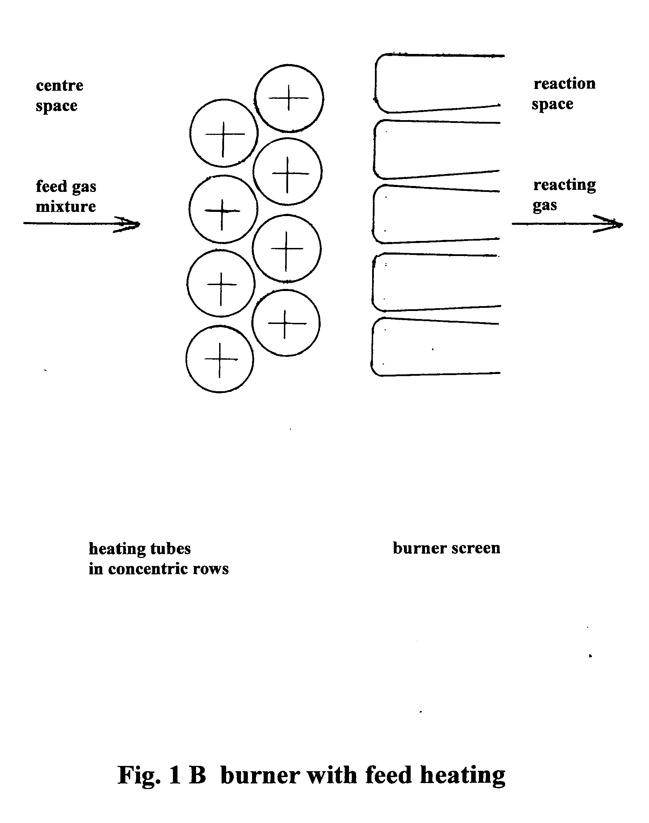

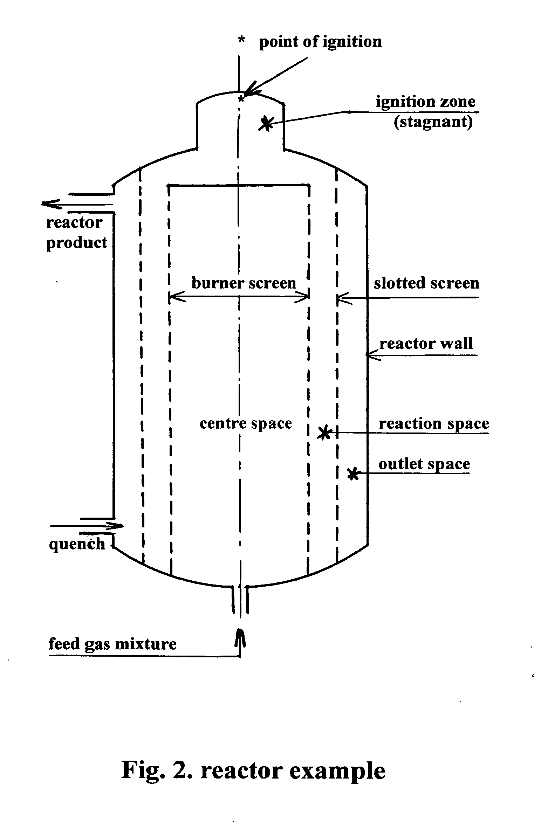

In view of the low reaction front propagation velocity, generally below 40 cm/sec, in partial oxidation conditions, burner surfaces are large.
A construction to fit a large burner surface in a limited space, and where the burner can be lighted by cool flame technology, is to use a circular, cylindrical burner, consisting of a row or a few rows of tubes and/or bars between which the feed gas mixture flows from inside out, with the burner installed in a reactor vessel. Tubes that are part of the burner may also be used as heat exchanger to bring the feed temperature to the optimum value. Provision is made to have in the burner a restriction where the velocity is above the reaction front propagation velocity in the feed gas mixture at burner inlet conditions, whilst the superficial exit velocity of the burner is below said propagation velocity. See fig 1.
For a burner processing 10,000 tonnes/day of methane with pure oxygen at 30 bar a burner size can be 2300 mm diameter and 10000 mm length, if the burner inlet conditions are chosen so that 20 cm/sec is the reaction front propagation velocity. Such a burner can be installed in a reactor vessel of about 3000mm diameter. See fig 2.
It will be clear that with the cool flame propagation velocity, in other words the reaction front propagation velocity, of 20 cm/sec in the feed gas mixture before reaction the burner lighting time is in the order of a minute.

### Guide to drawings

Figures 1 and 2 form a consistent example of an embodiment of the present invention. One ignition zone is included which is preferably stagnant during the ignition. In these drawings all construction details as for example attachment of internals to a reactor, have been omitted; the drawings serve to support this description only.
In normal operation the feed gas mixture enters the reactor from the bottom. It flows through the centre space to the cylindrical burner screen. The screen consists of wedge shaped bars, between which reaction fronts are located. At low intake the fronts are close to the centre space, at high intake they are close to the reaction space.
The reaction zone stretches from the reaction fronts to inside the reaction space. From the reaction space the reaction product flows via a cylindrical slotted screen into the outlet space. If the conditions chosen require rapid cooling (quench) of the reaction product, a cooling medium can be injected into the outlet space. From the outlet space the product is led to the work up section (not shown on drawing).
For start up the feed gas mixture follows the same route as in normal operation, but after leaving the reactor it is diverted to a disposal system like a flare. The top of the reactor is filled with the feed gas mixture by purging the gas present in the top part to the disposal system (purge line not shown on drawing). After closing the purge line the top part becomes the stagnant ignition zone. In this condition the ignition takes place. A reaction front is formed which moves downward through the reaction space between the burner screen and the slotted screen. After downward passage of the reaction front, local, stationary reaction fronts are left between the burner screen bars, and these local, stationary fronts are fed by the feed gas mixture that arrives from the centre part of the reactor.
During the start up period the ignition zone has been open to the reactor. During normal operation it may be isolated.

The pressure- and temperature rise caused by the controlled explosion as lighting process can be coped with in several ways. The easiest is to initiate the reactions while the reactor is at a lower than desired pressure, aiming at reaching normal operating pressure after the explosion. Another option is to design controlled pressure relieving facilities in such way that during the starting explosion the pressure does not rise significantly. The second method has as advantage that the temperature rise, determined by Cp (specific heat at constant pressure in J/mol.°C), is roughly 40% lower than in the first method, where the temperature rise is determined by Cv (specific heat at constant volume in J/mol.°C). Moreover, in the second method the reaction front propagation velocity in the feed gas that has not yet reacted, in and on the burner, remains about constant.

### Application of the invention in multi stage operation.

For some feeds, the temperature increase in the desired partial oxidation reactions is too large to have the reactions taking place below the syngas reactions threshold temperature, even when a product recycle is applied. In such cases two or more reactors might be used in series. The product of a reactor would be cooled and mixed with fresh oxygen before entering the next stage reactor. The ignition zone of the second and further reactors are preferentially filled with, for instance, a homogeneous natural gas / oxygen mixture for ignition, if necessary with nitrogen as diluent to limit the initial reactions temperature. With multi stage reactors even light naphtha could be partially oxidised below 500°C.
Multiple stage reactors may also be used if for a given maximum outlet temperature the inlet temperature is to be increased, so that the reaction front velocity is increased and the reactor size is reduced.
Multiple stage reactors may also be used in specific cases where a particular product slate can be obtained at a temperature far below 500°C, say 300°C.

Extension of the processing capacity in normal operation.

This section refers to possible features of the normal operation, that are influenced by the reaction front velocity as described above; these features may affect the process steps and/or means used as part of the invention..
Once a reaction zone at low temperature has been established, a situation hereafter referred to as base case, the processing capacity can be increased by injection of material into the reaction zone via another route than via the burner, in which reactions are initiated according to the present invention.
In one option, the hydrocarbon feed gas to the partial oxidation process is split in two parts. One part is homogeneously mixed with the oxygen required for the total feed gas quantity and fed to the burner as in the base case; the other part is injected into the reaction zone close to the reaction front. The oxygen enriched feed gas mixture to the burner causes a higher reaction front propagation velocity in the burner than in the base case, hence, a higher allowable feed velocity than in the base case. The result is an increased burner capacity in terms of total feed gas mixture.
If this option is used the feed gas temperature can be reduced while the reaction front velocity is kept constant. Thus, the option can be used to reduce the maximum reaction temperature instead of increasing the capacity of the system, both in comparison with the base case.
In another option, a part of the feed gas mixture as sent to the reaction zone via the burner, is sent to the reaction zone, close to the reaction front, bypassing the reaction front in the burner. For both capacity extension options a simple distribution device like a perforated pipe may be used, which may be part of the burner.

The extent to which the capacity extension options can be used depends on the margin that the base case leaves between the maximum reaction temperature and the threshold temperature for syngas reactions, since by the introduction of material into the reaction zone by other means than by the burner, local undesirable temperature increases can occur.

### Field of application of the invention

The invention is applicable primarily to partial oxidation of light hydrocarbons in the range methane - butane and their mixtures, and is particularly suitable for the processing of natural gas. It may be used for heavier feedstocks such as light naphtha.

## Claims

**1.**
A process for initiating and maintaining continuous partial oxidation in a homogeneous feed gas mixture comprising oxygen and hydrocarbons, the initiation and oxidation process taking place at variable temperatures, each of lower than 900°C, preferably lower than 627°C, more preferably lower than 500°C, wherein the continuous partial oxidation, once started up, takes place in and on a burner, the burner being located within a reactor space;
**characterised in that**
(1) a homogeneous gas mixture comprising oxygen and hydrocarbons is fed through the burner at an internal velocity which is higher than the velocity of the reaction front to be initiated as defined below, but which has a superficial velocity relative to the total burner exit area which is lower than the velocity of the reaction front to be initiated as defined below;
(2) initiation of the oxidation reactions of the process takes place in an ignition zone which, at initiation, contains the homogeneous feed gas mixture in a stationary manner, the ignition zone being, during initiation of the reactions, in open connection with the reactor space, and which initiation is carried out by using a low energy, high temperature ignition device, according to combustion research practice, to create a reaction at cool flame temperature conditions;
(3) the front of the reaction thus created by the ignition of step (2) propagates itself through the ignition zone and connected reactor space towards the burner;
and
(4) a stationary reaction front is established within the burner, the stationary reaction front being located where the reaction front initiated at ignition in the ignition zone encounters the homogeneous feed gas mixture flowing through the burner, at equal velocity and in the opposite direction to the final, stationary position of the reaction front.

**2.**
A process according to claim 1, in which the homogeneous feed gas mixture comprises oxygen and the reaction product of a process according to claim 1 or claim 2

**3.**
A process according to claim 2, in which the ignition zone, at initiation of the oxidation reactions, contains a homogeneous gas mixture comprising oxygen and light hydrocarbons, preferentially natural gas.

**4.**
A process according to claim 1, 2 or 3 in which the gas in the ignition zone moves, at the moment of ignition, with a velocity, lower than that of the reaction front, created by the ignition.

**5.**
A process according to claim 1, 2, 3 or 4 in which initiation of the oxidation reactions takes place in two or more ignition zones.
